Europäisches Patentamt

European Patent Office

Office européen des brevets

(11) Veröffentlichungsnummer: **0 215 301 B1**

(12) **EUROPÄISCHE PATENTSCHRIFT**

(45) Veröffentlichungstag der Patentschrift: **16.10.91**

(51) Int. Cl.⁵: **G01M 11/00**

(21) Anmeldenummer: **86111237.3**

(22) Anmeldetag: **14.08.86**

(54) Optisches Messverfahren.

(30) Priorität: **13.09.85 DE 3532705**

(43) Veröffentlichungstag der Anmeldung:
**25.03.87 Patentblatt 87/13**

(45) Bekanntmachung des Hinweises auf die
Patenterteilung:
**16.10.91 Patentblatt 91/42**

(84) Benannte Vertragsstaaten:
**AT CH GB LI NL SE**

(56) Entgegenhaltungen:
**EP-A- 0 140 853**
**EP-A- 0 168 114**
**DE-A- 2 716 788**
**FR-A- 2 520 113**

(73) Patentinhaber: **ANT Nachrichtentechnik GmbH**
**Gerberstrasse 33**
**W-7150 Backnang(DE)**

(72) Erfinder: **Freyhardt, Werner, Dipl.-Ing.(FH)**
**Nansenstrasse 31**
**W-7150 Backnang(DE)**
Erfinder: **Krull, Klaus, Dipl.-Ing. (FH)**
**Kantstrasse 3**
**W-7153 Weissach im Tal(DE)**
Erfinder: **Hagen, Michael, Dipl.-Ing.**
**Falkenstrasse 8**
**W-7153 Weissach 1(DE)**
Erfinder: **Warm, Wolfgang, Dipl.-Ing.**
**Karl-May-Weg**
**W-7151 Auenwald 3(DE)**

EP 0 215 301 B1

## Beschreibung

Die Erfindung betrifft ein optisches Meßverfahren, insbesondere zum Messen der Dämpfung an Glasfaserstrecken, wobei am Anfang der Strecke ein Sender und an ihrem Ende ein Empfänger angeschaltet ist. Über die Glasfaser wird zusätzlich zum Sendesignal eine weitere digitale Information übertragen.

Aus der DE-OS 216 788 ist es bekannt, neben dem Informationssignal ständig oder in Abständen ein die Funktionsbereitschaft des Lichtleiters anzeigendes Kontrollsignal über den Lichtleiter zu schicken, das am Lichtempfänger ausgesandt und vom Lichtsender reflektiert wird.

Aus der EP 168 114 A2 (gemäß Art 54 (3) und (4) Stand der Technik für den benannten Vertragsstaat GB) ist ein Verfahren zum Messen der Dämpfung von Lichtwellenleitern unter Verwendung eines Lichtsenders und eines Empfängers bekannt. Dabei wird die vom Sender abgestrahlte Lichtleistung unmittelbar im Bereich des Senders erfaßt und die Impulslänge unter Erhaltung der mittleren Lichtleistung entsprechend der Änderung der Sendeleistung verändert, so daß die so codierte Sendeleistung durch eine dem Empfänger zugeordnete Decodiereinrichtung erfaßt wird.

Weitere Meßverfahren an Glasfaserstrecken sind in den Literaturzitaten (1-6) beschrieben. Diese Verfahren beruhen darauf, daß in das eine Ende der Glasfaser ein optisches Signal eingekoppelt wird und am anderen Ende die austretende Lichtleistung gemessen wird. Dabei unterscheidet man zwischen dem Abschneide-Verfahren (two-point-method) und dem Einfügungs-Verfahren (insertion-loss-method).

Das Abschneide-Verfahren ist das am längsten bekannte Verfahren. Bei dieser Methode wird zweimal gemessen.

Zuerst wird die Lichtleistung $P_1$ am Ende der Testfaser festgestellt und danach schneidet man einige Meter nach der Einkoppelstelle die Faser ab und mißt die dort austretende Lichtleistung $P_2$. Aus der Differenz der beiden Werte ($P_1$ und $P_2$) kann der Dämpfungswert ermittelt werden.

Eine mögliche Alternative zum Abschneide-Verfahren ist das Einfügungs-Verfahren, bei dem die Faser einfach zwischen Sender und Empfänger eingefügt wird. Durch eine einmalige Eichung, mit einer artgleichen Eichfaser, wird der Betrag der eingekoppelten Lichtleistung vorbestimmt.

Die Meßeinrichtung für beide Verfahren ist dieselbe. Sie besteht üblicherweise aus einem Meßsender und einem Meßempfänger. Beide sind konstruktiv getrennt, da bei verlegten Glasfasern sich die beiden Faserenden an verschiedenen Orten befinden.

Die in diesen Meßeinrichtungen verwendete Technik weist einige markante Nachteile auf:

1.) Aufgrund der beiden Forderungen
- Messung möglichst hoher Dämpfungswerte
- mit möglichst hoher Genauigkeit

wird bei den heute üblichen Meßgeräten das optische Sendesignal sinus- oder rechteckförmig moduliert.

Das Modulationssignal hat nur eine einzige Frequenz. Dadurch ist im Meßempfänger ein frequenzselektiver Empfang möglich. Dies ist notwendig um einen möglichst hohen Signal-Rauschabstand zu erzielen. Nur damit können dann die obigen Forderungen erfüllt werden.

Eine solche selektive Messung erfordert Empfangsfilter mit nur wenigen Hertz Bandbreite und sehr hohe Frequenzkonstanz des Sendesignales und der Empfangsfilter. Dementsprechend ist ein sehr hoher Aufwand für Frequenz- und Temperaturstabilisierung erforderlich.

2.) Die Meßgenauigkeit einer Dämpfungsmeßeinrichtung ist unter anderem direkt abhängig von der Stabilität des optischen Senders bzw. dessen Ausgangsleistung und der Stabilität des optischen Empfängers bzw. der Umwandlung der optischen Empfangsleistung in ein elektrisches Signal.

Um eine Stabilität der Ausgangslichtleistung bei einem Laser auf $\leq$ 0,1 dB zu gewährleisten, muß seine Temperatur auf $\leq$ 1° C stabilisiert werden. Entsprechend muß auch der optische Empfänger temperaturstabilisiert sein. Die Maßnahmen für eine solche Temperaturstabilität sind mit hohem Aufwand, hohen Kosten und hohem Leistungsverbrauch verbunden.

3.) Trotz der vorgenannten Stabilisierungsmaßnahmen ist eine hohe Langzeitkonstanz der Meßeinrichtungen nicht zu gewährleisten. Deshalb müssen Meßsender und Meßempfänger vor jedem Meßzyklus miteinander geeicht werden. Dies ist häufig nur mit großen Schwierigkeiten und Kosten lösbar insbesondere dann, wenn die beiden Faserenden räumlich sehr weit voneinander entfernt sind, wie es z.B. bei verlegten Kabeln der Fall ist. Die Entfernungen können 50 km und mehr betragen.

4.) Häufig müssen bei Glasfasern die Dämpfungswerte bei unterschiedlichen Wellenlängen gemessen werden (z.B. 850 nm, 1,3 $\mu$m, 1,5 $\mu$m). Dazu müssen im Meßsender unterschiedliche Lichtquellen verwendet werden. Im Meßempfänger ist es jedoch möglich den gesamten Meßbereich mit nur einer Fotodiode abzudecken. Allerdings sind zwei Probleme dabei zu beachten.

Erstens hat die Fotodiode bei den verschiedenen Wellenlängen unterschiedliche Umwandlungsfaktoren. Und zweitens ist dieser Umwandlungsfaktor temperaturabhängig.

2

Dies hat zur Folge, daß beim Umschalten auf eine neue Wellenlänge der Meßsender und -empfänger neu kalibriert werden müssen.

5.) Die optischen Sende- und Empfangsdioden unterliegen sehr starken Exemplarstreuungen bezüglich der Lichtausgangsleistung, der Wellenlänge, dem Umwandlungsfaktor, der Wellenlängenabhängigkeit, der Empfindlichkeit, der Rauscheigenschaften usw..

Dies hat zur Folge, daß bei der Herstellung und Produktion von Meßgeräten ein sehr großer zusätzlicher Hardwareaufwand für Kalibrierung und Justage anfällt und hohe Prüf- und Abgleichkosten entstehen.

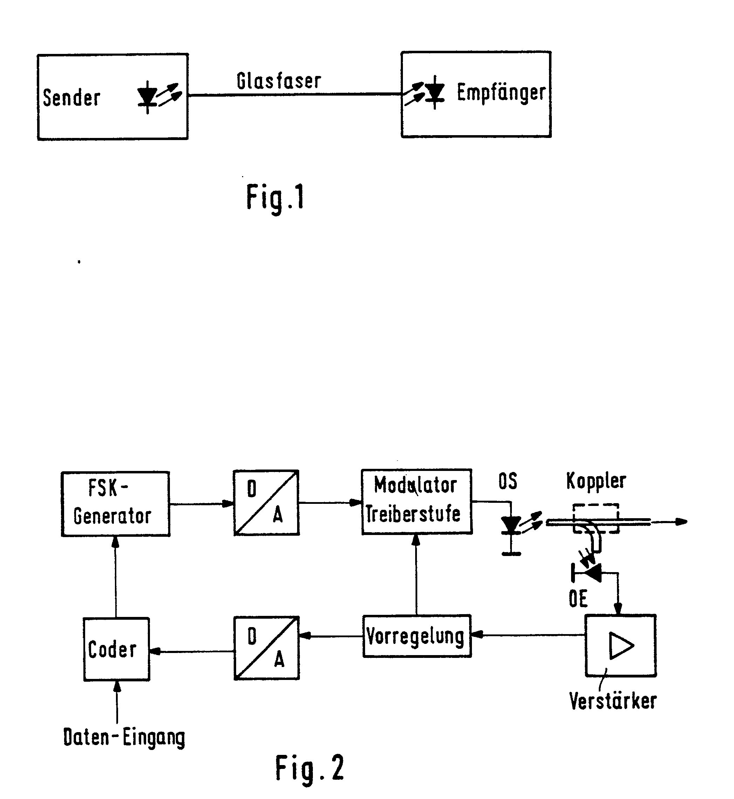

Alle diese Nachteile werden durch die in Anspruch 1 beanspruchte Erfindung vermieden. Weitere Ausführungen sind in den abhängigen Ansprüchen 2 bis 7 beansprucht. Die Erfindung wird anhand der Figuren 1 bis 9 erläutert.

Fig. 1 zeigt die prinzipielle Meßanordnung.

Im Sender wird beispielsweise ein sinus- oder rechteckförmiges Meßsignal erzeugt und in die Glasfaser eingekoppelt.

Im Empfänger wird das empfangene Signal mittels eines Korrelationsverfahrens ausgewertet und damit z.B. die Dämpfung der Faser bestimmt.

Zusätzlich werden im Sender Informationen codiert und vorzugsweise mit FSK (Frequenzumtastung) zum Empfänger übertragen, dort demoduliert und zur Korrektur und Auswertung des Dämpfungswertes herangezogen.

Die Funktionsweise ist also derart, daß der Sender im Rythmus der digitalen Information, die aus "1"- und "0"-Elementen besteht, die Modulationsfrequenz für den optischen Sender zwischen zwei verschiedenen Werten umschaltet. Wobei die Frequenz $f_1$ dem "1"-Element und $f_2$ dem "0"-Element der digitalen Information entspricht. Mit dieser digitalen Information kann nun dem Empfänger fortlaufend, z.B. der Betriebszustand, die Wellenlänge, die Ausgangsleistung, die Temperatur, die Korrekturfaktoren usw. des Senders, mitgeteilt werden. Der Empfänger wertet diese Information in seiner Auswerteeinrichtung entsprechend vorgegebener Regeln aus. Prinzipiell ist auch die Übertragung von anderen beliebigen Daten möglich, die dann an einem Ausgangsport des Meßempfängers abgenommen werden können.

Fig. 2 zeigt das Blockschaltbild des Senders.

Der Sender läßt sich in zwei Funktionsblöcke unterteilen, in einen analogen und einen digitalen Schaltungsteil.

Der analoge Schaltungsteil besteht aus dem Modulator und der Treiberstufe, einem optischen Sender und Empfänger, einem Verstärker und einer Regelung.

Der digitale Schaltungsteil besteht aus A/D-Wandler, Coder, FSK-Generator und D/A-Wandler.

Der FSK-Generator erzeugt die beiden Modulationssignale mit den Frequenzen $f_1$ und $f_2$. Die Generierung kann sowohl auf analoge, als auch auf digitale Weise durch Auslesen von z.B. in einem ROM gespeicherten Werten erfolgen.

Ein nachfolgender D/A-Wandler wandelt die digitalen Modulationssignale in eine analoge Form um. Ein Modulator mit Treiberstufe steuert damit den optischen Sender OS an. Dieser optische Sender kann beispielsweise eine LED oder Laserdiode sein. Ein Teil des vom optischen Sendeelement emittierten Lichtes wird von einem optischen Empfänger OE detektiert, in einem Verstärker verstärkt und sowohl einer Regelung zur Vorregelung des Treiberstromes für den optischen Sender, als auch einem A/D-Wandler zugeführt. Im A/D-Wandler wird das Signal digitalisiert und dient dem Coder als Meßwert, welcher die augenblickliche Ausgangsleistung des optischen Senders angibt. Der Coder wiederum steuert nun den FSK-Generator, d.h. abhängig von der digitalen Information wird ein Signal mit der Frequenz $f_1$ oder $f_2$ abgegeben.

Der Coder hat einen zweiten Eingang, über den sich beliebige andere Daten zuführen lassen, die dem Empfänger mitgeteilt werden sollen.

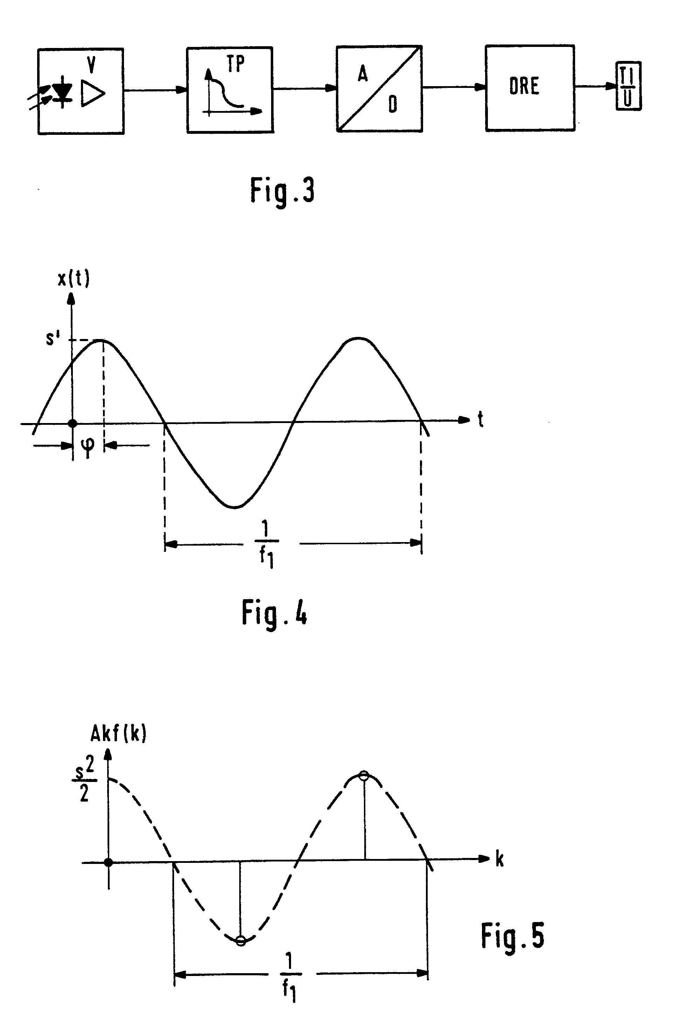

Fig. 3 zeigt das Blockschaltbild des Empfängers.

Der Empfänger hat folgende Aufgaben durchzuführen:
- Signalleistung eines verrauschten Meßsignals ($f_1$; S/N> = 1) bestimmen,
- verrauschtes FSK-Signal ($f_1$, $f_2$; S/N> = 1) demodulieren und die Information dekodieren und
- aus der Signalleistung und der übertragenen Information die Dämpfung der Faser berechnen und anzeigen.

Zur Lösung dieser Aufgaben dienen die in Fig. 3 gezeigten Funktionsblöcke. Die von der Fotodiode detektierte Licht information wird im Verstärker V verstärkt, tiefpaßgefiltert (TP) und mit einem Analog-Digitalwandler A/D digitalisiert.

Die weitere Verarbeitung erfolgt in einer digitalen Recheneinheit DRE, die z.B. mit einem Signalprozessor realisiert werden kann. Das Prinzip der Verarbeitung beruht darauf, daß die Bestimmung der Signalleistung und die Demodulation des FSK-Signales realisiert wird durch die Berechnung der Kurzzeit-Autokorrelations-

3

funktion AKF des Empfangssignales.

Die Bestimmung der Signalleistung wird anhand der Fig. 4 und 5 erläutert.

Um die Signalleistung beispielsweise eines sinusförmigen Signals

$$x(t) = S \cdot \cos (2 \cdot \pi \cdot f_1 \cdot t + \phi)$$

(Fig. 4) zu bestimmen, genügt es, die zeitdiskrete Kurzzeit-Autokorrelationsfunktion AKF

$$AKF(k) = \frac{1}{N} \sum_{i=0}^{N-1} x(iT_a) \cdot x((i-k)T_a)$$

$$= (S^2/2) \cdot \cos(2 \cdot \pi \cdot f_1 \cdot k \cdot T_a)$$

an einer geeigneten Stelle k

$$2 \cdot \pi \cdot f_1 \cdot k / f_a = n \cdot \pi, \ n = 1, 2, 3 \ldots$$

$f_1$ :             Frequenz des Meßsignals

$f_a = 1/T_a$ :     Abtastfrequenz

k :             Zahl der Verschiebungen k um $T_a$ der AKF

zu berechnen (Fig. 5).

Die Genauigkeit des Verfahrens ist abhängig von

- der Integrationslänge N der AKF,
- der Wortbreite des Digital/Analogwandlers und der digitalen Recheneinheit,
- dem Signal/Rauschverhältnis,
- der Art des Rauschsignals,
- der Konstanz des Frequenzverhältnisses $f_1/f_a$.

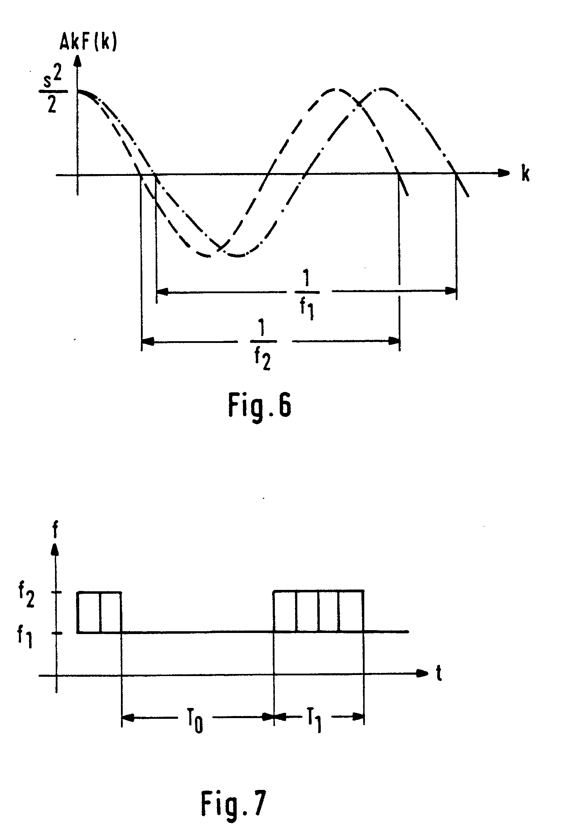

Die Demodulation des FSK-Signales und die Ermittlung der darin enthaltenen Information zeigt Fig. 6.

Um ein FSK-Signal zu demodulieren, genügt es wiederum, die AKF an einer geeigneten Stelle k

$$2 \cdot \pi \cdot f_1 \cdot k/f_a = n \cdot \pi, \ n = 1, 2, 3 \ldots$$

zu berechnen.

Die beiden Sendefrequenzen müssen in einem bestimmten Verhältnis

$$f_1 / f_2 = n / (n + 1)$$

$f_1, f_2$ :     Frequenzen, zwischen denen umgetastet wird (mark & space) stehen (Fig. 6).

Die Demodulation reduziert sich damit auf die Entscheidung AKF > 0 oder AKF < 0.

Die erreichbare Bitfehlerwahrscheinlichkeit hängt von den oben genannten Faktoren ab.

Schließlich zeigt Fig. 7 den zeitlichen Ablauf einer Dämpfungsmessung.

Während einer Zeit $T_0$ wird im Meßsender das Meßsignal und während der Zeit $T_1$ das FSK-Signal erzeugt.

FSK- und Meßsignal werden periodisch übertragen und im Meßempfänger wie vorstehend beschrieben ausgewertet.

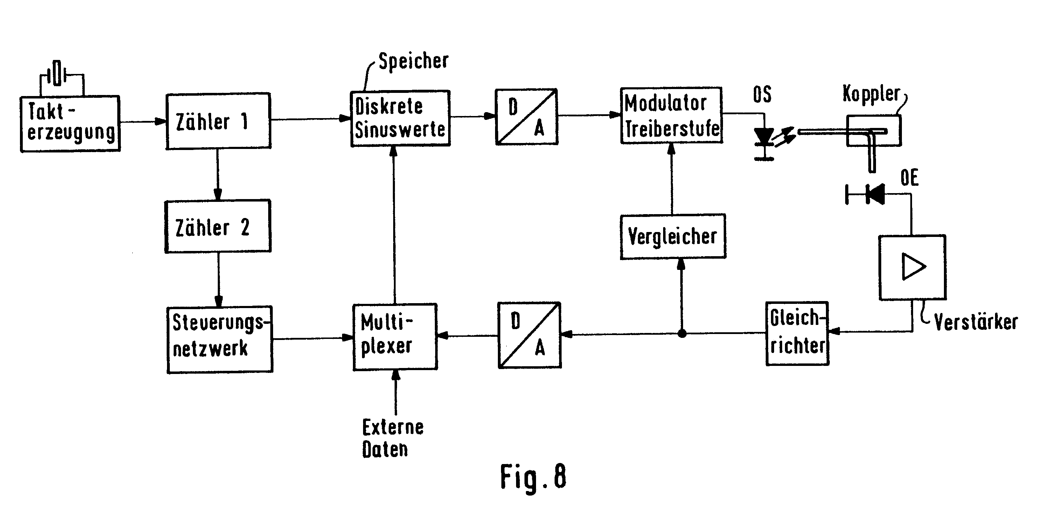

Eine erfindungsgemäße Ausführungsmöglichkeit des Meßsenders zeigt Fig. 8.

Der periodische Meßablauf wird durch eine Takterzeugung, beispielsweise einem Quarzgenerator, und zwei Zählern 1 und 2 erzeugt. Der Zähler 1 generiert den Adreßbereich für die in einem Speicher digital abgespeicherten Sinuswerte, die in einem folgenden Analog-Digital-Wandler in analoge Spannungswerte umgesetzt werden. Der Zähler 2 mit Steuerungsnetzwerk steuert den periodischen Ablauf von Meß- und Datenzyklus.

Dazu faßt der Multiplexer den digitalen Meßwert für den Sendepegel und evtl. anliegende externe Daten zusammen.

Im Modulator wird der Modulationsstrom für den optischen Sender OS aus der Sinusspannung und der sendepegelabhängigen Vergleicherspannung erzeugt. Ein kleiner Teil des optischen Ausgangssignales wird abgezweigt und von einem optischen Empfänger OE detektiert. Die Auskopplung des Meßsignales kann z.B. wie in Fig. 8 gezeigt mittels eines Strahlteilers oder Kopplers erfolgen. Das Meßsignal wird in einem Verstärker verstärkt und gleichgerichtet. Der so gewonnene Gleichspannungswert wird digitalisiert und ist dann der Meßwert, der in codierter Form dem Meßempfänger übermittelt wird.

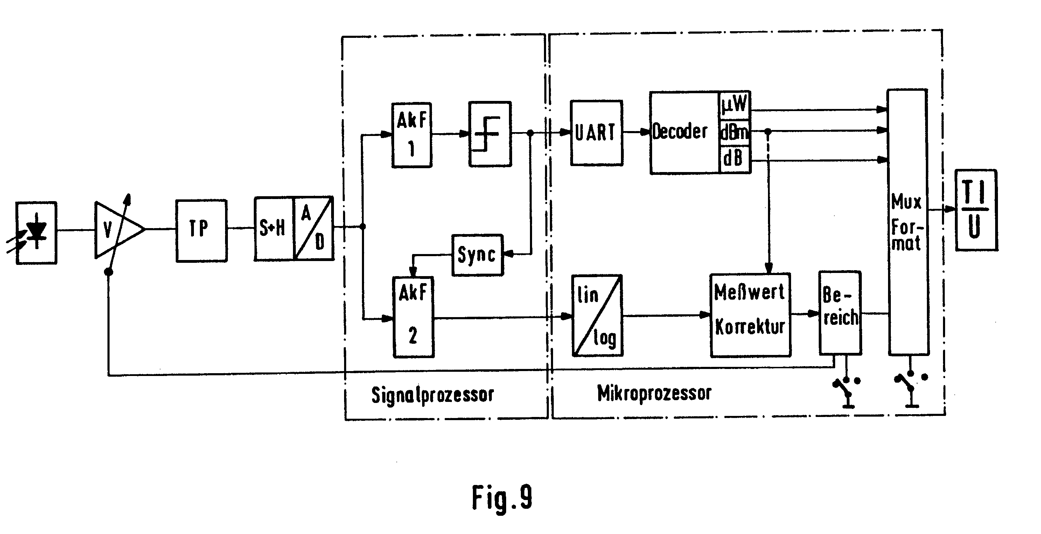

Eine erfindungsgemäße Ausführungsmöglichkeit des Meßempfängers zeigt Fig. 9.

Das optische Empfangssignal wird nach dem optoelektrischen Wandler einer analogen Vorverarbeitung zugeführt, welche einen umschaltbaren Verstärker V, ein Tiefpaßfilter TP sowie die Einheit (S + H, A/D) zur Analog-Digital-Wandlung enthält.

Die eigentliche Signalverarbeitung wird in einem digitalen Signalprozessor und einem Mikroprozessor durchgeführt.

Der Signalprozessor berechnet im wesentlichen die beiden Autokorrelationsfunktionen AKF 1 und AKF 2 und führt eine Entscheidung durch.

Zur Demodulation des FSK-Signales dient die Funktion AKF 1 in Verbindung mit einem Entscheider, der feststellt, ob eine logische "0" oder "1" übertragen wurde.

Die Meßwertgewinnung erfolgt mit der Funktion AKF 2. Der Block Sync. sorgt dafür, daß die AKF 2 zum Beginn des Meßintervalles neu synchronisiert wird.

Im Mikroprozessor wird der serielle Datenstrom von einem asynchronen Receiver/Transmitter UART empfangen, mit dem Decoder nach Wunsch aufbereitet und der Meßwertkorrektur zugeführt. Gegebenenfalls kann dieser Wert auch angezeigt werden.

Der Meßwert selbst wird mit der übertragenen Information korrigiert und dann in der gewünschten Maßeinheit (dB, dBm, $\mu$W usw.) angezeigt.

Das erfindungsgemäße Verfahren gibt somit die Möglichkeit, bei gleichbleibender Genauigkeit gegenüber dem vorbekannten Verfahren, die Messung, insbesondere die Bestimmung der Dämpfung einer Glasfaserstrecke, mit verkleinertem Aufwand auf Sende- und Empfangsseite auszuführen. Die Anwendung des digitalen Korrelationsverfahrens bringt eine Verbesserung des Signalrauschabstandes und dadurch auch bei hohen Dämpfungswerten noch ausreichende Genauigkeit der Messung. Durch die aufgezeigte Abspeichermöglichkeit von Korrekturfaktoren für Exemplarstreuungen wird ebenfalls eine Verringerung des Aufwandes für die Prüfung und den Abgleich von Meßsender und Meßempfänger erzielt. Außerdem entfällt auf der Sende- und Empfangsseite eine Frequenz- und Temperaturstabilisierung.

Literaturverzeichnis

(1) P. Schlang
Dämpfungsmessung an optischen Fasern
NTZ 33(1980)1 S. 30-31
(2) M. Tateda; T. Horiguchi; M. Tohuda; N. Uchida
Optical loss measurement in graded-index fiber using a dummy fiber
Applied Optics 18(Oct. 1979)19 S. 3272-3275
(3) Egon Meier-Engelen
Das Licht in der Glasfaser unter Kontrolle haben
Net 38(1984)1 S. 9-17
(4) M. Kaiser
Messung der Übertragungseigenschaften von Multimode-Lichtwellenleitern
NTZ 34(1981)7 S. 418-422
(5) D. Rittich; W. Meininghaus
Meßgeräte für die optische Nachrichtentechnik
Frequenz 32 (1978)12 S. 350-355
(6) div. Verfasser
Technical Digest-Symposium on optical Fiber Measurement, 1980
NBS Publication 597

**Patentansprüche**

1. Optisches Meßverfahren, insbesondere zum Messen der Dämpfung an Glasfaserstrecken, mit den folgenden Merkmalen:

a) am Anfang der Strecke ist ein Sender und an ihrem Ende ein Empfänger geschaltet,

b) zur Messung ist das optische Sendesignal sinus- oder rechteckförmig moduliert,

c) zum Übertragen einer digitalen Information ist das optische Sendesignal mit zwei Modulationsfrequenzen moduliert, die im Rhythmus der digitalen Information umgetastet werden,

d) das zur Messung modulierte optische Sendesignal und das zum Übertragen der Information modulierte optische Sendesignal werden periodisch übertragen und

e) das optische Sendesignal wird im Meßempfänger mittels einer Autokorrelationsfunktion (AKF) ausgewertet.

2. Verfahren nach Anspruch 1, dadurch gekennzeichnet, daß mittels Frequenzumtastung alle interessierenden Größen des Senders übertragen und im Empfänger angezeigt werden oder zur Korrektur dienen.

3. Verfahren nach einem der Ansprüche 1 oder 2, dadurch gekennzeichnet, daß eine digitale Autokorrelationsfunktion verwendet wird.

4. Verfahren nach einem der Ansprüche 1 bis 3, dadurch gekennzeichnet, daß die Signalverarbeitung mit nur einem Prozessor durchgeführt wird.

5. Verfahren nach Anspruch 4, dadurch gekennzeichnet, daß der Prozessor für die Signalverarbeitung die Meßwertkorrektur und Meßwertdarstellung (in dB, dBm, $\mu$W usw.) mit übernimmt,

6. Verfahren nach Anspruch 5, dadurch gekennzeichnet, daß im Empfänger alle Korrekturfaktoren und Exemplarstreuungen bei der Herstellung des Meßgerätes einmalig abgespeichert werden und bei der jeweiligen Meßeinstellung zum Korrigieren des Meßwertes herangezogen werden.

7. Verfahren nach Anspruch 6, dadurch gekennzeichnet, daß es Anwendung findet zur Dispersionsmessung.

**Claims**

1. Optical measuring method, in particular for the measurement of the attenuation of stretches of glass fibre, with the following features:

a) a transmitter is connected to the beginning of the stretch and a receiver is connected to its end,

b) the optical transmission signal is modulated sinusoidally or rectangularly for the measurement,

c) the optical transmission signal is modulated at two modulation frequencies, which are shift-keyed in the rhythm of a digital information, for the transmission of the digital information,

d) the optical transmission signal modulated for the measurement and the optical transmission signal modulated for the transmission of the information are transmitted periodically and

e) the optical transmission signal is evaluated in the measurement receiver by means of an auto-correlation function (AFK).

2. Method according to claim 1, characterised thereby, that all magnitudes of the transmitter, that are of interest, are transmitted by means of frequency shift-keying and indicated in the receiver or serve for correction.

3. Method according to one of the claims 1 and 2, characterised thereby, that a digital auto-correlation function (AFK) is used.

4. Method according to one of the claims 1 to 3, characterised thereby, that the signal-processing is performed with only one processor.

5. Method according to claim 4, characterised thereby, that the processor for the signal-processing also takes over the measurement value correction and the measurement value representation (in dB, dBm, $\mu$W and so forth).

6. Method according to claim 5, characterised thereby, that all correction factors and sample scatters in the manufacture of the measuring instrument are stored once in the receiver and drawn upon for the respective measurement adjustment for the correction of the measurement value.

7. Method according to claim 4, characterised thereby, that it finds application for the measurement of dispersion.

**Revendications**

1. Procédé de mesure optique, notamment pour la mesure de l'atténuation sur des lignes en fibre(s) de verre, avec les caractéristiques suivantes :
   a) un émetteur est monté au début de la ligne et un récepteur à la fin de celle-ci,
   b) pour la mesure, le signal d'émission optique est modulé sinusoïdalement ou rectangulairement,
   c) pour la transmission d'une information numérique, le signal d'émission optique est modulé avec deux fréquences de modulation qui sont manipulées au rythme de l'information numérique,j
   d) le signal d'émission optique modulé pour la mesure et le signal d'émission optique modulé pour la transmission de l'information sont transmis périodiquement, et
   e) le signal d'émission optique est évalué dans le récepteur de mesure au moyen d'une fonction d'autocorrélation (AKF).

2. Procédé selon revendication 1, caractérisé par le fait que toutes les grandeurs interessantes de l'émetteur sont transmises et indiquées dans le récepteur, ou servent à la correction, au moyen du déplacement de fréquence.

3. Procédé selon revendication 1 ou 2, caractérisé par le fait que l'on utilise une fonction d'autocorrélation numérique.

4. Procédé selon l'une des revendications 1 à 3, caractérisé par le fait que le traitement du signal n'est effectué qu'avec un processeur.

5. Procédé selon revendication 4, caractérisé par le fait que le processeur pour le traitement du signal assume conjointement la correction de la valeur de mesure et la représentation de la valeur de mesure (en dB, dBm, $\mu$W, etc.).

6. Procédé selon revendication 5, caractérisé par le fait que dans le récepteur tous les facteurs de correction et dispersions exemplaires sont déposés en mémoire une seule fois, lors de la fabrication de l'appareil de mesure, et sont utilisés pour corriger la valeur de mesure lors de chaque établissement d'une mesure.

7. Procédé selon revendication 6, caractérisé par le fait qu'il est utilisé pour la mesure de dispersion.

Fig.1

Fig.2

Fig.3

Fig.4

Fig.5

Fig. 6

Fig. 7

EP 0 215 301 B1

Speicher

| Takt-<br>erzeugung | → | Zähler 1 | → | Diskrete<br>Sinuswerte | → | D / A | → | Modulator<br>Treiberstufe | OS | Koppler |

| Zähler 2 |

| Steuerungs-<br>netzwerk | → | Multi-<br>plexer | ← | D / A | ← | Gleich-<br>richter |

Vergleicher

OE

Verstärker

Externe
Daten

## Fig. 8

Fig.9